# EUROPEAN PATENT APPLICATION

(11) **EP 2 200 252 A1**
(43) Date of publication of application: **23.06.2010**
(21) Application number: 08305968.3
(22) Date of filing: 18.12.2008
(51) Int. Cl.: H04L 29/06, H04L 29/08

(54) **Method for supervision of a real time call by an application server in NGN/IMS core network.**

(71) Applicant: Alcatel Lucent, 75008 Paris (FR)
(72) Inventor: Agrawal, Ashish, 110085, DELHI (IN); Gupta, Richa, 110085, DELHI (IN)
(74) Representative: Nicolle, Olivier

(57) **Abstract**

The invention relates to a method for supervision of a real time call by an application server (AS) in a NGN/IMS based core network. The application server (AS) is able to select a delegated mode of supervision in which the connection from its context is released even after connection establishment without affecting the call and wherein the call context maintenance is delegated to a switching node of the core network

## Description

The present invention relates to the field of telecommunication and in particular to the NGN/IMS ("New Generation Network. IP Multimedia Subsystem") based core network used to trigger SIP ("Session Initiation Protocol") application server to which subscriber is registered for value added services.

Currently, any IN ("intelligent Network") based application hosted on SCP ("Service Control Point") triggered over INAP ("Intelligent Network Application Part") from SSPs ("Service Switching Point") in legacy network have event notification/response mode where the same SSP which triggered the SCP listens to all the events on calling or called party both and notify SCP for any desired action/instruction based on application logic for which subscriber has subscribed. This all happens in signaling path itself and this is how SSP triggering SCP for application still has complete view of signaling path and SCP is not involved in that. SCP is maintaining its independent context based on armed event notifications from SSP. This provides SCP with a mechanism so as to enable application closing its context at any point of time where application is no more required.

With non-legacy network, any SIP ("Session Initiation Protocol") based application server triggered from soft switch, on SIP ISC ("Service Control Interface") in NGN/IMS ("New Generation Network. IP Multimedia Subsystem") core network, cannot function in this mode.

Reason being that such application server is acting as a Back-to-Back User Agent ("B2BUA") and thus maintaining the session between the originating switch/user and terminating switch/user resulting in limitation of being into context until end of call even when application server has nothing to provide in terms of logic after certain point.

Currently, system is not capable of closing the context except for end of call or before establishing the call.

With more and more operators shifting to NGN/IMS based core network thus requiring SIP based application server triggered on SIP ISC interface, it is becoming more and more difficult to defend these limitations which service provider used to have with INAP triggering.

The present invention provides precisely a solution to this problem.

It thus aims to overcome this limitation of application server triggered on ISC interface in NGN/IMS core network about not being able to release call context before end of call.

It thus also aims for an enhancement to system interface logic and system application logic to identify/receive the event/trigger for which application will gracefully release the call context such that leg established with calling party is not affected.

It concerns a method for supervision of a real time call by an application server AS in NGN/IMS based core network.

According to a general definition of the invention, said application server is able to select a delegated mode of supervision in which the connection from its context is released even after connection establishment without affecting the call and the call context maintenance is delegated to a switching node of the core network.

In practice, said delegated mode of supervision is supported by an application server over Service Control Interface ("ISC").

According to one embodiment, an application server interface logic ("ASIL") is enabled to supervise call until response such that said application server prepares to release the context on receiving the desired response from an user entity ("UE)" by arming additional events and sending SIP REFER to the switching node.

According to another embodiment, the application server interface logic ("ASIL") is able to collect, interpret and handle the armed events in order to decide upon continuing the context or closing it by analysis of type of event in runtime.

According to yet another embodiment, said application server is further able to change the mode of supervision for different called parties in the same call based on tri criterion of configuration, user entity in-call Inputs and database.

In practice, the supervision is performed dynamically and in real time.

According to yet another embodiment, a connected called party can determine the supervision mode of said application server for next user entity to be connected in same call by prefixing specific DTMF digits to transferred number while transferring.

In practice, the user entity is connected in delegated mode of supervision if not part of subscription database.

According to yet another embodiment, the application server, on receiving non-success event notification is able to attempt call completion and thus remain in context till success.

Other characteristics and advantages of the invention will emerge in the light of the following detailed description and the drawings in which:
- **Figure 1** depicts schematically a mode of supervision named "no supervision";
- **Figure 2** depicts schematically a mode of supervision named "full supervision";
- **Figure 3** depicts schematically a mode of supervision named "delegated" or "light supervision" according to the invention;
- **Figures 4** and **5** are flow diagrams illustrating the delegated mode of supervision according to the invention.

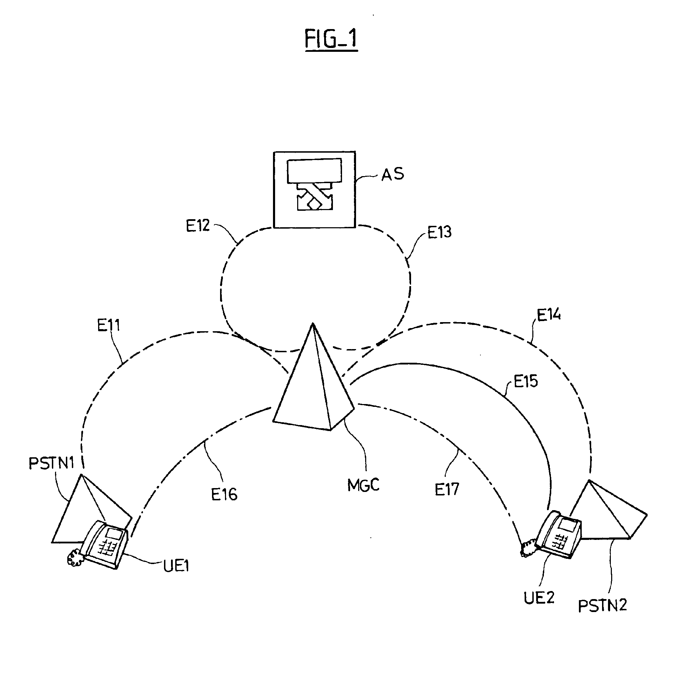

With reference to **figure 1**, a call is depicted in a NGN/IMS core network. An end user entity UE1 (the caller) via a public switched telephone network PSTN1 requests to establish an chosen application processed by an application server AS. The call involves a soft switch MGC, for example of the type of Media Gateway Controller. The call is dedicated to another end user entity UE2 accessible via PSTN2.

According to the mode of supervision named "no supervision", the call comprises at least five main steps.

Firstly, according to step E11, the end user entity UE1 requests to establish the application to the soft switch MGC

Secondly, according to step E12, the soft switch MGC invites the application server AS.

Thirdly, according to step E13, the application server AS requests the soft switch MGC with the message of 302 Moved Temporarily having contact details.

Fourthly, according to step E14, the soft switch MGC requests the end user entity UE2.

Fifthly, according to step E15, the end user entity UE2 answers to the soft switch MGC.

After establishment, the end user UE1 is connected to the soft switch MGC (step E16) and the soft switch MGC to the end user UE2 (step E17).

The application server is involved only for the path of the steps E11 and E12. The path for the steps E13, E14, and E15 is followed without application server maintaining context or supervising the call. Thus, application just remains in the request path from caller to application. There after not, even in request path while establishing, response path while establishing and after establishment (steps E16 and E17).

If the configured option is for no supervision mode, then application logic will respond with same or translated/alternate number as per business logic of application and send it to proposed system interface logic with mode value set to "No Supervision" i.e. notification to close the context after responding to received SIP INVITE message with a redirection message of 302 Moved Temporarily with contact to alternate destination. Closing the session by proposed system interface logic will follow this. On the other hand, switching entity will connect caller to the redirected location.

In practice, No Supervision mode is adapted when AS is not expected to be in context at all. AS process the request and respond with redirection to some other entity/agent.

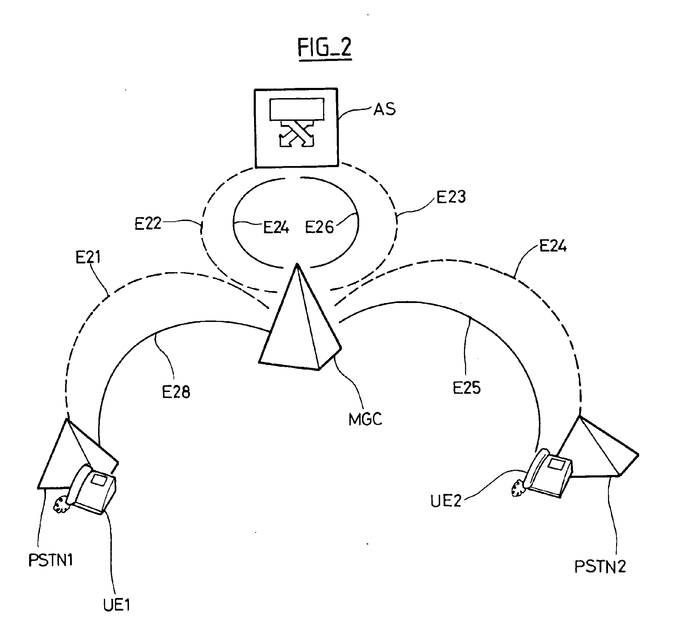

With reference to **figure 2****,** application server AS is involved throughout the call even after establishment in the mode of supervision named "full supervision".

The steps E21, E22, E24, E25 are respectively identical to steps E11, E12, E14, E15 as described in reference to **Figure 1****.**

The step E23 is an invitation from the application server AS to the soft switch MGC.
The step E26 is a message of the type "200 OK" from the MGC to AS.
The step E27 is a message of the type "200 OK" from the AS to MGC.
The step E27 is a message of the type "answer " from AS to UE1.

If the configured option is for full supervision mode, then application logic AS will respond with same or translated/alternate number as per business logic of application (step E13) and send it to proposed system interface logic MGC with mode value set to "full", which in turn will create SIP INVITE towards called party in independent context but maintaining session and correlation for incoming leg and outgoing leg. The application server AS remains in context till the end of call.

Full Supervision mode is adapted when AS is expected to remain in context till the end of call. This makes sense when AS is not sure if its services can be required again, even after connection between the end users

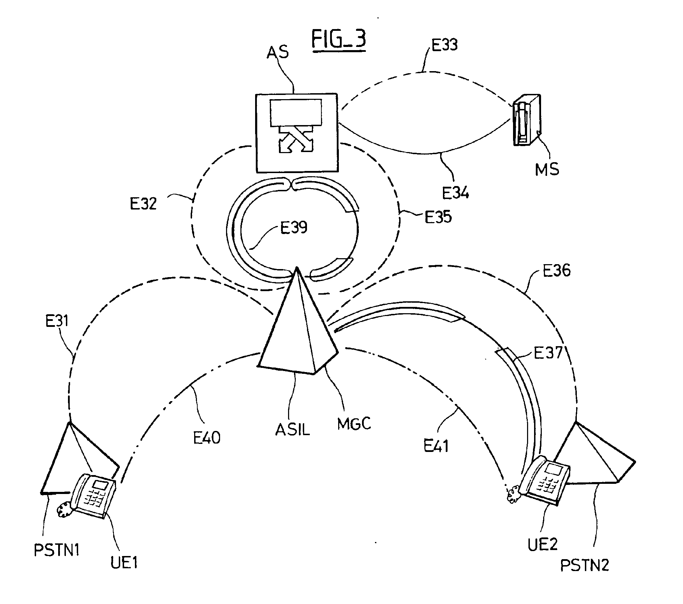

With reference to **Figure 3****,** the "delegated" or "light" mode of supervision is depicted.

The steps E31, E32, E36, E37 are respectively identical to steps E11, E12, E14, E15 as described in reference to **Figure 1****.**

The step E33 is an invitation from the application server AS to a media server MS.
The step E34 is message of the type "200 OK" from the MS to AS.
The step E35 is a message of the type "Refer" from the AS to MGC.
The step E38 is a message of the type "Notify 200 OK" from MGC to AS.
The step E39 is a message of the type "Bye" from AS to MGC.

The steps E40 and E41 are respectively identical to steps E16 and E17 described in reference to **Figure 1****.**

The application server AS is involved only for the steps E31, E32, E33, E34, E35, and E36. While on steps E37, E38, E39, application server AS is waiting for response to its referring requests. On getting the positive response, application server AS releases the connection from its context. Steps E40 and E41 are followed without application server maintaining context or supervising the call.

Light or delegated Supervision mode is aimed at enabling AS to remain in context upto some response from the end user entity and then gracefully getting out of it. The application logic can trigger alternate destination in case of non successful response from network.

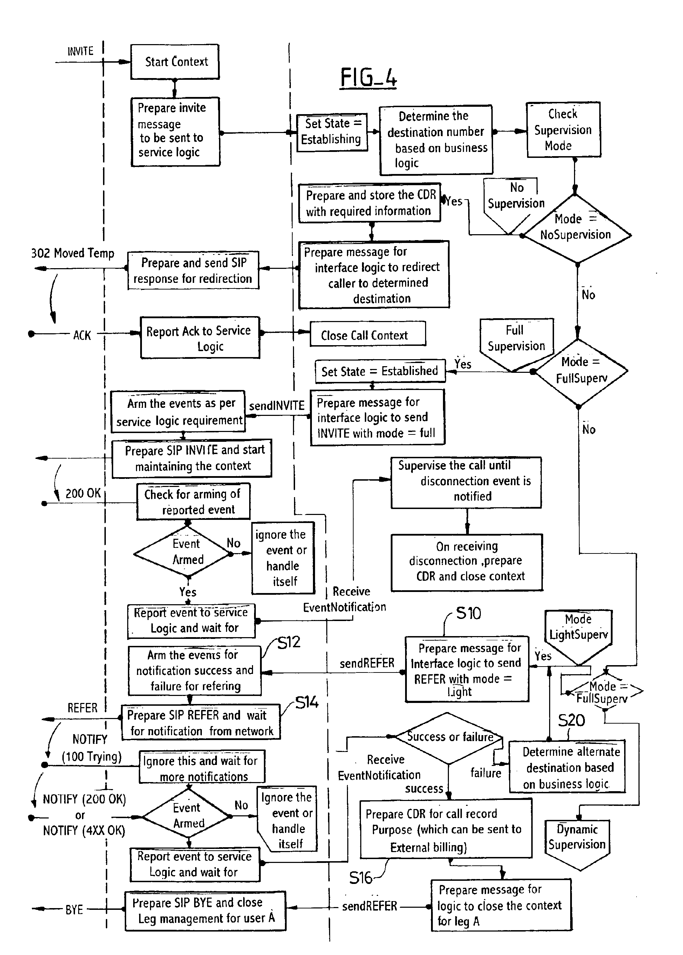

With reference to **Figure 4****,** If the configured option is for light or delegated supervision mode, then application logic AS and interface logic ASIL (here MGC) work as following :

According to step S10, the application logic AS performs its business logic as usual and give the destination number to proposed system interface logic MGC with mode set to "light". Moreover, application logic AS arms (step S12) the interface logic MGC for relevant events of successful or unsuccessful delegation attempt which in turn will decide to release or maintain the application server in context.

For a sip based application server AS , session controller/switching module MGC has an interface logic which is able to process dynamically, through message passing, being informed about what all messages/event needs to be passed on to application service logic.

According to step S14, the interface logic MGC sends SIP REFER message sent to switching node with refer-to header giving the destination number sent by application logic AS and method set to INVITE so that switching entity MGC can create and send INVITE towards the referred user UE2.

The interface logic MGC is bound to expect notification messages. All intermediate notifications for which it is not armed will be handled by interface logic MGC itself and only those for which it is armed will be sent back to interface logic module MGC

According to step S16, the application logic AS is getting event notification of successful connection will instruct interface logic MGC to gracefully close the context for this call.

This shall be done by closing all the context variables, preparing CDR data as per business logic. If applicable, send the CDR details to centralized billing node.

Whereas on getting event notification of unsuccessful condition, application logic AS will find alternate destination based on its logic (Step S20).

Dynamic supervision mode is aimed at logic driven selection of mode which will be governed by configuration, real time network inputs and database search result.

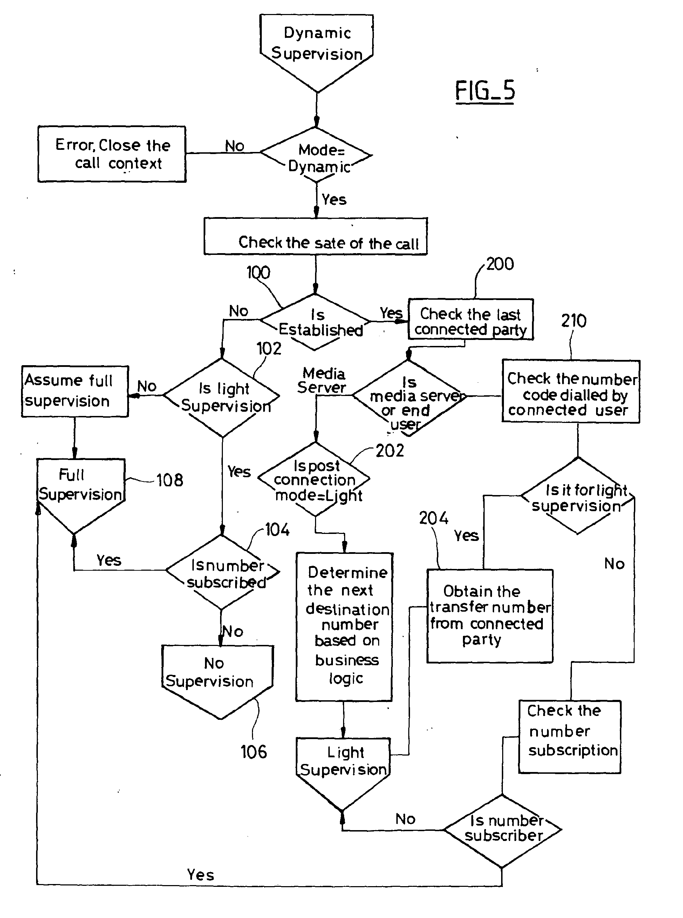

With reference to **Figure 5****,** if the configured option is for dynamic supervision mode, then application logic AS will apply following logic to determine the correct time for leaving the context:

Application logic AS will check the state in which service is lying to see if its already connected or is in connecting state.

According to step 100, if not established, the application logic AS will check (step 102) if it is configured to have light supervision for connection to unsubscribed numbers.

If so, the number obtained as a result of business logic or uncharged IVR input or user dialed number will be checked (step 104) against the database of subscribed numbers

If not present (step 106), application logic will send redirection message with contact address as that of the resultant number.

If present (step 108), application logic will supervise the complete call by sending connection message and thus maintaining session throughout

According to step 200, If established, the application logic AS will check if the last connected party was media server or the end user.

If it was media server, application logic checks (step 202) if post IVR connection mode is set to light supervision, and if true (step 204), the number obtained for connection after result of IVR or through business logic is sent to proposed system interface logic with connection mode set to "light". Rest of the logic is as described for light supervision configuration mode.

If it was some end user (step 210), application logic checks for the digits dialed by the last connected party. If digits match to the configured digits for the light supervision, the number to be connected which is provided by the last called party in case of transfer, or configured number in case of follow on, will be sent to proposed system interface logic with connection mode set to "light". Rest of the logic is as described for light supervision configuration mode.

If transfer digits dialed by last connected user does not match the configured digits for light supervision. The number to be connected is checked against the database of subscribed numbers.

If not present, the number is sent to the interface logic with connection mode set to "light". Rest of the logic is as described for light supervision configuration mode.

If present, call is still supervised until transferred to non-subscribed number.

The application logic will enable application to possess three roles, thus in turn, working in four modes (No Supervision, Full Supervision, Light Supervision, Dynamic mode) based on configuration settings.

## Claims

1. A method for supervision of a real time call by an application server (AS) in a NGN/IMS based core network, wherein said application server (AS) is able to select a delegated mode of supervision in which the connection from its context is released even after connection establishment without affecting the call and wherein the call context maintenance is delegated to a switching node of the core network.

2. A method according to claim 1, wherein said delegated mode of supervision is supported by an application server (AS) over service control interface.

3. A method according to claim 1, wherein an Application Server Interface Logic (ASIL) is enabled to supervise call until response such that said application server (AS) prepares to release the context on receiving the desired response from an User Entity (UE) by arming additional events and sending SIP REFER to the switching node.

4. A method according to claim 3, wherein the Application Server Interface Logic (ASIL) is able to collect, interpret and handle the armed events in order to decide upon continuing the context or closing it by analysis of type of event in runtime.

5. A method according to claim 1 wherein said Application Server (AS) in a NGN/IMS network is further able to change the mode of supervision for different called parties in the same call based on tri criterion of configuration, User Entity (UE) in-call Inputs and database.

6. A method according to claim 5, wherein the supervision is performed dynamically and in real time.

7. A method according to claim 5 wherein a connected called party can determine the supervision mode of Application Server for next User Entity to be connected in same call by prefixing specific DTMF digits to transferred number while transferring.

8. A method according to claim 5 wherein the User Entity (UE) is connected in delegated mode of supervision if not part of subscription database.

9. A method according to claim 1 wherein said application server (AS), on receiving non-success event notification attempts call completion and thus remain in context till success.
